# EUROPEAN PATENT APPLICATION

(11) **EP 2 581 842 A1**
(43) Date of publication of application: **17.04.2013**
(21) Application number: 12187947.2
(22) Date of filing: 10.10.2012
(51) Int. Cl.: G06F 17/30

(54) **Method for creating a keyword-based user-personalized webpage**

(30) Priority: 13.10.2011 US 201161546968 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The embodiments of the invention provide a computer-implemented method of creating a user-personalized web page, comprising the steps of: (a) creating a container for collecting data; (b) defining at least one keyword to be associated with said container; (c) retrieving relevant data from the internet or a database based on the at least one keyword and collecting the data in said container; and (d) displaying the data of said container on a web page when the user browses that web page. Moreover, the invention provides a computer program product to perform such a method.

## Description

### FIELD

The present invention in general relates to the management of online content of the internet or a database and in particular to a method of creating a keyword-based user-personalized webpage.

### BACKGROUND

The information available over the internet is provided by webpages, the content of which is defined by the provider of the webpage. The webpages can be searched by a search engine via the internet. However, in general the user has no influence on the combination of information presented on a webpage.

To address the user's preferences in a more efficient way, the use of cookies is known. The cookies are used for an origin website to send state information to the user's browser and for the browser to return the state information. Cookies may be used to remember the information about the user who visited the website in order to show relevant content in the future. Moreover, systems are known where a user has limited influence on the webpage content by setting parameters on a webpage when the user visits the webpage for the first time.

However, the influence of the user on the webpage content is limited. Thus, there is a continuous need to increase the efficiency of internet browsing and searching efforts. The user would benefit from allowing the user to personally control his internet experience more efficiently.

### BRIEF SUMMARY

In the first aspect the invention provides a computer-implemented method of creating a user-personalized web page, comprising the steps of:
(a) creating a container for collecting data;
(b) defining a plurality of keywords to be associated with said container;
(c) retrieving relevant data from the internet or a database based on the plurality of keywords and collecting the data in said container; and
(d) displaying the data of said container on a web page when the user browses the web page.

The method allows a user to view, define, and share a container on a webpage that collects data relevant for the user. It is therefore like a custom-made webpage for the user filled with information that is interesting to this specific user, the owner of this custom-container. A structure of the container (also called a "seed") applicable in the method is disclosed in the pending application "Management of Online Content in a Network," U.S. patent application No. 61533842, the disclosure of which is hereby incorporated by reference.

According to a preferred embodiment, the method further comprises the step of updating the data retrieved from the internet or the database each time the user browses said webpage. Thus, the container is continuously updated with new data from the internet or database. The data of the container, or at least part of it, may also be persistent, as chosen by the user.

The container can be displayed or navigated via a web browser on many different platforms (like PCs, mobile phones, internet, cable TV, gaming consoles, etc.). As the container is provided via the internet or database, i.e., the data of the container are stored on a server different from the platform of the user, the user can browse his personalized webpage as long as the connection to the internet is available independently from the platform.

Every user can have multiple personalized web pages to sort and separate his information as he likes. Moreover, embodiments of the invention disclosed herein allow a user to create more than one container on the user-personalized webpage. Furthermore, each container may have more than one keyword.

The container may have multiple channels for languages, thus information can automatically be translated or a translated version of the specific container can be displayed.

According to a preferred embodiment, the method further comprises the step of defining further parameters associated with the container. Such a parameter may define who has the right to change, delete, and/or add to the data of the container; who has the right to change, delete, and/or add keywords associated with the container; and who has the access to the review the data collected in said container. Thus, the system allows a user to create a personalized webpage which is only accessible by the user who has created the webpage. Moreover, it is possible to share this webpage with other users, e.g., in a social network or an online community. The user who has created the container and defined the keywords may decide whether the content of the container can be seen by other users in the network. He may further allow other users to add content to the container or to modify the one or more keyword(s).

The parameters associated with the container may further include profile data of the user. Thus, other users who have the right to view the data collected in the container may also see who has created the container.

Moreover, parameters associated with the container may further comprise a name of the container, in particular a name based on the at least one of the plurality of keywords of the container. In one embodiment, as long as a container is created, the system suggests a name for the container based on the defined keyword. The user can either accept it as a name or input another name he or she likes. The name of the container can be modified later at any time to adjust it to the user's liking. For example, the user may enter the keywords "roadster," "Tuning," and "Motor-show" for the container. After the system displays the search results, the system suggests the container name "Sports Cars." The user wants to define the container differently and types in the container name "Car News." He then adds another keyword, "Car News," to the container to better define the search results.

The user may define data to be collected persistently in the container. However, based on the at least one keyword associated with the container, more recent data may also be displayed as it is derived from the internet or the database. Thus, the data content of the container may change dynamically.

In a further step of the method of a preferred embodiment, the user may manually mark specifically displayed content of the container as "relevant" or "not relevant." The data retrieved from the internet or database are updated when the user browses the webpage the next time, and the manual marks may be used to delete data content of the container which was marked as "not relevant." Moreover, the data content marked as "relevant" may be displayed on the top of a list or highlighted when displaying the data of said container on the webpage.

According to a preferred embodiment, the method may further comprise marking at least the one keyword associated with the container with a degree of priority based on the user's input and/or based on a frequency as to how often the data of said keyword has been selected to be displayed on the webpage. Thus, if more than one keyword is defined for the container, the system may provide a different number of hits for each keyword depending on the priority of the keyword.

Moreover, the method may further comprise measuring how long the user is viewing a certain data content of the container, connected with a specific keyword. Depending on this measurement, the priority of the keyword may be set.

According to a preferred embodiment, the method may further comprise the step of defining daytime or a day of the week, month or year on which the data of the at least one keyword shall be displayed on the webpage when the user browses the webpage. Some information might be more relevant on certain days or certain times of day. Thus, this information will be displayed more likely on the recurring times, e.g. the user wants to see the sports news only in the evening around 7 pm.

A further aspect of the present disclosure refers to a computer program including instructions that, when executed on the computer system, performs the computer-implemented method of any one of the methods described above.

In one embodiment, the computer program is integrated into the software of a social network, an email server, or an internet forum service. Wherever the user has a custom page that is displaying his personal data, the described method can be integrated.

Many networks place the user after login on a starting page that displays many pieces of information the user does not want and will ignore, or even be annoyed by the "misinformation." The described method filters all non-relevant data and sorts all relevant data to increase the usefulness of such a starting page. Furthermore, as the user interacts with the page (by managing the content), the user can increase the usefulness of this page to him/her. This connects and binds the user to the whole service.

### DETAILED DESCRIPTION OF EMBODIMENTS

Embodiments of the invention are described herein including examples illustrating how the invention may be used. It should be understood that these embodiments illustrate examples only, and various changes, substitutions, and alterations can be made within the scope of the invention.

### Setting up a container

A user signs in for a service provided via the internet using a browser installed on a user's platform, which may be any internet-compatible device, and creates a container for a user-personalized webpage. This container starts empty in case the service is not connected with an already existing account profile of the user.

The user may enter specific keywords for the container to search for, thus gathering relevant information on the internet. The hits of such searches are gathered in the container. This information is then used to display information on the webpage that can be continuously updated.

### User wants to be updated on news about company A

For example, a user wants to be always updated on news about a specific company "A." The user connects to his personalized webpage and creates a new container. He creates at least one keyword that connects his new container to the company A, i.e., the company name as the first keyword. The user can now enter more keywords directly, or look at the container content that is created dynamically after the entering of the first keyword. From the found content he can select what content is "relevant", i.e., he wants more of that, or what is "not relevant", i.e., this content should be deleted from the container and similar content in a new internet search should be avoided.

### Sharing a container of one user

Assume User A created a container to collect information about his favorite soccer club. This container is changeable only by him (due to his settings), but he shares this container with a user group, i.e., his friends. His friends are able to view the container, but not to change anything. One of his friends, user B, wants an information container of his own. User B can create his own container based on the content of the container of his friend, user A, at that moment. After the creation, the container of user B is independent of the container of user A. User B can now change anything about his own container as he wishes.

Although the embodiments of the present invention have been described in detail, it should be understood that various changes, substitutions, and alterations can be made hereto without departing from the spirit and the scope of the invention as defined in the appended claims. For example, the computer-implemented method may be performed on different platforms. Moreover, the invention is not limited to specific data content as used for explanation of the sample embodiments in the description.

## Claims

1. A computer-implemented method of creating a user-personalized web page, comprising the steps of:
(a) creating a container for collecting data;
(b) defining a plurality of keywords to be associated with said container;
(c) retrieving relevant data from the internet or a database based on the plurality of keywords and collecting the data in said container; and
(d) displaying the data of said container on a web page when the user browses that web page.

2. The method of claim 1 further comprising updating the data retrieved from the internet or the database each time the user browses that web page.

3. The method of claim 1 or 2 further comprising the step of defining further parameters associated with said container.

4. The method of claim 3, wherein the further parameters define who has the right to change, delete and add the data of the container.

5. The method of claim 3 or 4, wherein the parameters define who has the right to change, delete and add keywords associated with said container.

6. The method of one of the claims 3 to 5, wherein the parameters define who has the access to view the data collected in said container.

7. The method of one of the claims 3 to 6, wherein the parameters comprise a name of the container, in particular a name based on at least one of said plurality of keywords.

8. The method of one of the claims 3 to 7, wherein the parameters include profile data of the user.

9. The method of one of the preceding claims further comprising the step of defining data collected persistently in said container.

10. The method of one of the preceding claims further comprising the step of marking data in said container as "relevant" or "not relevant" based on a user input.

11. The method of one of the preceding claims further comprising the step of marking at least one of said plurality of keywords associated with said container with a degree of priority based on at least one of a user's input, a frequency as to how often the data of said keyword have been selected to be displayed on the webpage, and a frequency as to how often the keywords have been defined by the user.

12. The method of one of the preceding claims, further comprising the step of defining a daytime, or a day of the week, month or year on which the data of the at least one keyword shall be displayed on said web page when the user browses to said web page.

13. The method of one of the preceding claims, wherein step (a) further comprises creating a plurality of containers and step (b) comprises defining a plurality of keywords for each of said plurality of containers.

14. A computer program including instructions that, when executed on a computer system, performs the computer-implemented method of one of the preceding claims.

15. The computer program of claim 14, integrated in a social network, an email service, or an internet forum service.
